# EUROPEAN PATENT APPLICATION

(11) **EP 4 644 738 A1**
(43) Date of publication of application: **05.11.2025**
(21) Application number: 23912087.6
(22) Date of filing: 25.12.2023
(51) Int. Cl.: F16J 15/34, F16C 17/04

(54) **SLIDING COMPONENT**

(30) Priority: 28.12.2022 JP 2022211592
(71) Applicant: Eagle Industry Co., Ltd., Minato-ku Tokyo 105-8587 (JP)
(72) Inventor: SUZUKI Hiroshi, Tokyo 105-8587 (JP); UCHIDA Kenta, Tokyo 105-8587 (JP); FUKUDA Shogo, Tokyo 105-8587 (JP); OU Iwa, Tokyo 105-8587 (JP); IMURA Tadatsugu, Tokyo 105-8587 (JP)
(74) Representative: WSL Patentanwälte Partnerschaft mbB
(86) International application number: PCT/JP2023/046519
(87) International publication number: WO 2024/143308

(57) **Abstract**

A sliding component capable of improving lubrication while preventing leakage of a sealed fluid is provided. In sliding components 10 and 20 in which a pair of sliding surfaces 11 and 21 rotate relative to each other to partition a sealed fluid space S2 and a leakage space S1, the sliding surface 11 is provided with a plurality of dynamic pressure generation grooves 12 with different radial lengths, the plurality of dynamic pressure generation grooves 12 are arranged such that a contour of a tip on the leakage space S1 side draws peaks M each of which is protruded toward the leakage space S1 and valleys V each of which is recessed toward the sealed fluid space S2 and the peaks and valleys are alternately arranged in a circumferential direction, and the sliding surface 11 is further provided with at least one fluid recovery groove 15 which is located on the downstream side of the peak M in a relative rotation direction and on the leakage space S1 side.

## Description

### {TECHNICAL FIELD}

The present invention relates to sliding components, for example, sliding components that rotate relative to each other and are used for, for example, a shaft sealing device sealing a rotating shaft of a rotating machine in an automotive seal field, a general industrial machinery seal field, or another seal field or a bearing of a machine in an automotive bearing field, a general industrial machinery bearing field, or another bearing field.

### {BACKGROUND ART}

As a shaft sealing device for preventing leakage of a sealed fluid, for example, a mechanical seal is provided with a pair of annular sliding components that rotate relative to each other and have sliding surfaces that slide against each other. In such a mechanical seal, in recent years, there has been a demand for the purpose of environmental measures and the like to reduce the energy lost due to sliding.

For example, in a mechanical seal illustrated in Patent Citation 1, a plurality of positive pressure generation grooves are formed on a sliding surface of a stationary seal ring. The plurality of positive pressure generation grooves communicate with a sealed fluid side and extend substantially linearly to be inclined from the sealed fluid side to the atmosphere side toward the downstream in the rotation direction of a rotating seal ring. The sealed fluid in the positive pressure generation groove is guided along the positive pressure generation groove with the rotation of the rotating seal ring and flows out between the sliding surfaces from the tip to thereby generate a positive pressure.

Further, since each positive pressure generation groove has a different length to the tip, the positive pressure generation grooves are arranged so that the contour drawn by the tips forms a sine wave with repeated peaks and valleys in the circumferential direction. Accordingly, since the positive pressure is generated at different radial positions along the circumferential direction, the radial pressure gradient can be reduced.

### {CITATION LIST}

### {Patent Literature}

Patent Citation 1: WO 2020/209258 A (pages 7 to 9, FIG. 3)

### {SUMMARY OF INVENTION}

### {Technical Problem}

In such a sliding component of Patent Citation 1, there is known one provided with a plurality of atmosphere side positive pressure generation grooves in addition to the plurality of positive pressure generation grooves. The atmosphere side positive pressure generation groove communicates with the atmosphere side and extends substantially linearly toward the downstream side of the rotating seal ring in the rotation direction to be inclined from the atmosphere side toward the sealed fluid side. The fluid in the atmosphere side positive pressure generation groove is guided along the atmosphere side positive pressure generation groove with the rotation of the rotating seal ring and flows out between the sliding surfaces from the tip of the atmosphere side positive pressure generation groove to thereby generate a positive pressure. Accordingly, since the fluid on the atmosphere side and the sealed fluid having flowed out between the sliding surfaces from the positive pressure generation groove are recovered by the atmosphere side positive pressure generation groove, the leakage of the sealed fluid to the atmosphere side is prevented.

However, the sealed fluid having flowed out between the sliding surfaces from the tip of the positive pressure generation groove collides with the sealed fluid having flowed out between the sliding surfaces from the tip of the atmosphere side positive pressure generation groove. Further, both the positive pressure generated by the positive pressure generation groove and the positive pressure generated by the atmosphere side positive pressure generation groove increase and decrease according to the rotation speed of the rotating seal ring.

As a result, since the position at which the fluid having flowed out between the sliding surfaces from the positive pressure generation groove collides with the fluid having flowed out between the sliding surfaces from the atmosphere side positive pressure generation groove is easily displaced and the force due to the positive pressure fluctuates due to the collision, there is a concern that a floating balance between the sliding components is difficult to be maintained.

The present invention has been made in view of such problems and an object thereof is to provide a sliding component capable of improving lubrication while preventing leakage of a sealed fluid.

### {Solution to Problem}

In order to solve the foregoing problem, sliding components according to the present invention is sliding components in which a pair of sliding surfaces rotate relative to each other to partition a sealed fluid space and a leakage space, wherein at least one of the sliding surfaces is provided with a plurality of dynamic pressure generation grooves with different radial lengths, wherein the plurality of dynamic pressure generation grooves are arranged such that a contour of a tip on the leakage space side draws peaks each of which protruded toward a leakage space side and valleys each of which is recessed toward a sealed fluid space side and the peaks and valleys are alternately arranged in a circumferential direction, and wherein the one of the sliding surfaces is provided with at least one fluid recovery groove which is located on a downstream side of the peak in a relative rotation direction and on the leakage space side. According to the aforesaid feature of the present invention, the sliding components can retain the sealed fluid, having flowed out to the downstream side in the relative rotation direction from the peak, between the sliding surfaces for a long period of time. Further, since the influence of the pressure generated by the fluid recovery groove is small and the dynamic pressure generation groove effectively generates a dynamic pressure, it is easy to maintain floating balance. As a result, the sliding components can improve lubrication while preventing leakage.

It may be preferable that the fluid recovery groove does not communicate with the leakage space. According to this preferable configuration, the sliding components can prevent the influence due to the leakage space side fluid. Further, the dynamic pressure generation groove can more effectively generate a dynamic pressure without generating a large pressure by the fluid recovery groove.

It may be preferable that a plurality of the fluid recovery grooves are formed and extend in a circumferential direction. According to this preferable configuration, the sliding components can guide the sealed fluid having flowed out from the dynamic pressure generation groove in the circumferential direction and secure the sealed fluid between the sliding surfaces. Further, the dynamic pressure generation groove can more effectively generate a dynamic pressure without generating a large pressure by the fluid recovery groove.

It may be preferable that the fluid recovery groove is disposed between adjacent two of the peaks. According to this preferable configuration, the sliding components can reduce pressure distribution over a wide radial region while preventing leakage.

It may be preferable that the fluid recovery groove is disposed at a position overlapping with at least the peak in the radial direction. According to this preferable configuration, the sliding components can secure a land region necessary for retaining the sealed fluid for a long period of time.

### {BRIEF DESCRIPTION OF DRAWINGS}

FIG. 1 is a longitudinal cross-sectional view illustrating an example of a mechanical seal including sliding components according to a first embodiment of the present invention.
FIG. 2 is a view in which a sliding surface of a stationary seal ring in the first embodiment is viewed from the axial direction.
FIG. 3 is a partially enlarged view of FIG. 2.
FIG. 4 is a partially enlarged view in which a modified example of the sliding surface of the stationary seal ring in the first embodiment is viewed from the axial direction.
FIG. 5 is an enlarged view in which a sliding surface of a stationary seal ring as one of sliding components according to a second embodiment of the present invention is viewed from the axial direction.
FIG. 6 is an enlarged view in which a sliding surface of a stationary seal ring as one of sliding components according to a third embodiment of the present invention is viewed from the axial direction.
FIG. 7 is an enlarged view in which a sliding surface of a stationary seal ring as one of sliding components according to a fourth embodiment of the present invention is viewed from the axial direction.
FIG. 8 is an enlarged view in which a modified example of the sliding surface of the stationary seal ring in the fourth embodiment is viewed from the axial direction.
FIG. 9 is an enlarged view in which a sliding surface of a stationary seal ring as one of sliding components according to a fifth embodiment of the present invention is viewed from the axial direction.
FIG. 10 is an enlarged view in which a sliding surface of a stationary seal ring as one of sliding components according to a sixth embodiment of the present invention is viewed from the axial direction.

### {DESCRIPTION OF EMBODIMENTS}

Modes for carrying out a sliding component according to the present invention will be described on the basis of the embodiments.

### {First embodiment}

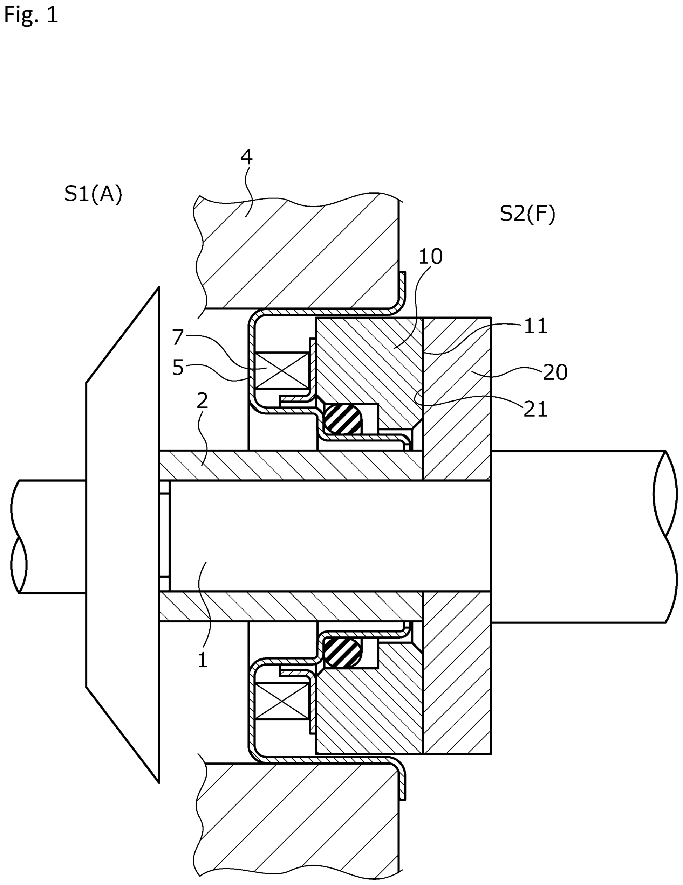

Sliding components according to a first embodiment of the present invention will be described with reference to FIGS. 1 to 4. Furthermore, in this embodiment, an example in which the sliding component is applied to a mechanical seal will be described.

Further, a description will be made on the assumption that a sealed fluid F as a first fluid is present in an inner space S1 of a mechanical seal, an atmosphere A as a second fluid is present in an outer space S2, an outer diameter side of a sliding component constituting the mechanical seal is a sealed fluid space side (high pressure side), and an inner diameter side thereof is a leakage space side (low pressure side). Further, for convenience of description, grooves and the like formed on the sliding surface may be indicated by dots in the drawings.

The mechanical seal illustrated in FIG. 1 is of an inside type that seals the sealed fluid F that tends to leak from the inner diameter side to the outer diameter side of the sliding surface and has the outer space S2 that communicates with the atmosphere A. Furthermore, in this embodiment, an example is illustrated in which the sealed fluid F is a high-pressure liquid and the atmosphere A is a gas having a lower pressure than the sealed fluid F.

The mechanical seal mainly includes a stationary seal ring 10 which serves as one annular sliding component and a rotating seal ring 20 which serves as the other annular sliding component. The rotating seal ring 20 is provided on a rotating shaft 1 via a sleeve 2 to be rotatable together with the rotating shaft 1. The stationary seal ring 10 is provided on a seal cover 5 fixed to a housing 4 of an attached device to be non-rotatable and movable in the axial direction. The stationary seal ring 10 is biased in the axial direction by an elastic member 7, and a sliding surface 11 of the stationary seal ring 10 and a sliding surface 21 of the rotating seal ring 20 are adapted to slide closely against each other. Furthermore, the sliding surface 21 of the rotating seal ring 20 is flat, and this flat surface does not have any recesses such as grooves.

The stationary seal ring 10 and the rotating seal ring 20 are typically made of SiC (as an example of hard material) or a combination of SiC and carbon (as an example of soft material). However, any sliding material can be applied insofar as it is used as a sliding material for a mechanical seal. Furthermore, the SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

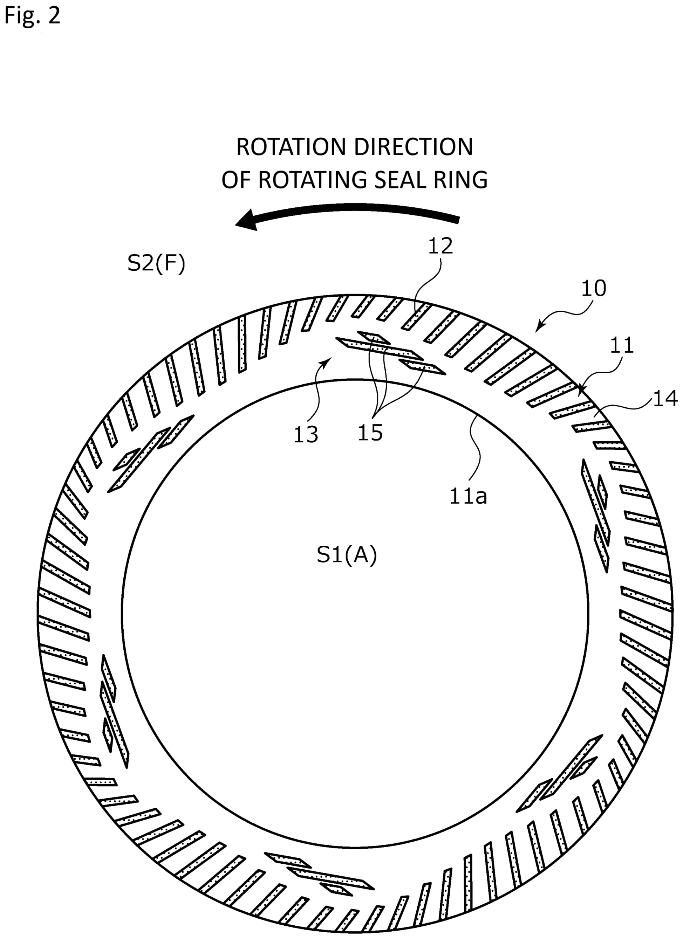

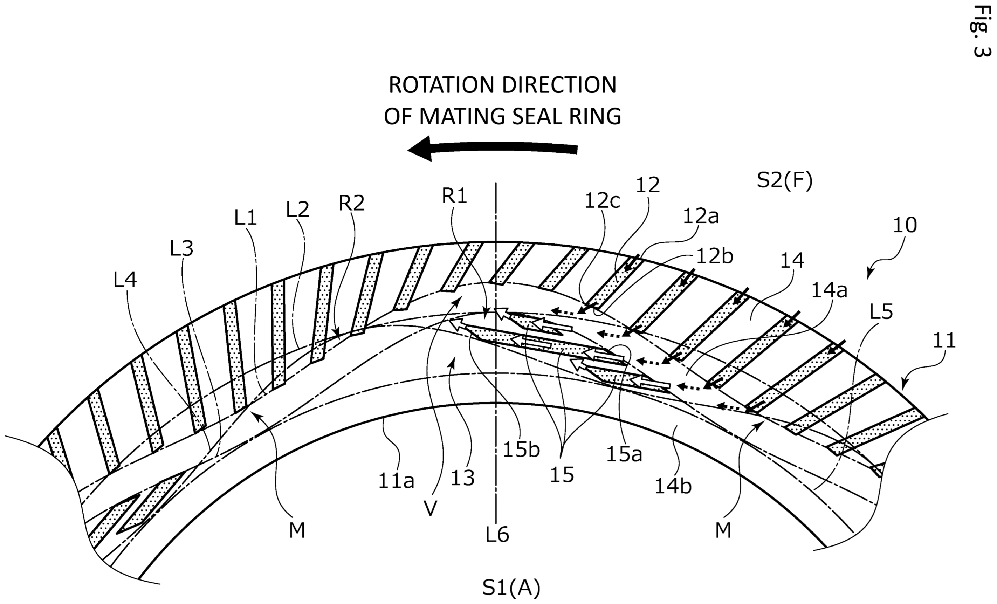

As illustrated in FIGS. 2 and 3, the rotating seal ring 20 which is a mating seal ring slides relative to the stationary seal ring 10 in a counterclockwise direction as indicated by the solid arrow.

The sliding surface 11 of the stationary seal ring 10 is provided with a plurality of dynamic pressure generation grooves 12 (in this embodiment, there are six peaks M to be described later and six valleys V to be described later) and a plurality of fluid recovery mechanisms 13 each composed of a groove (in this embodiment, there are six sets of inclined grooves 15 as three fluid recovery grooves). Further, a portion other than the dynamic pressure generation groove 12 and the fluid recovery mechanism 13 of the sliding surface 11 is a flat land 14.

As illustrated in FIG. 3, the dynamic pressure generation groove 12 extends linearly from an outer diameter end 12a to an inner diameter end 12b toward the downstream side of the rotating seal ring 20 in the rotation direction. That is, the dynamic pressure generation groove extends toward the downstream side in the relative rotation direction. Further, the depth of each dynamic pressure generation groove 12 is substantially constant. The outer diameter end 12a of the dynamic pressure generation groove 12 communicates with the outer space S2, and the inner diameter end 12b serving as a dynamic pressure generating portion is closed. Furthermore, the dynamic pressure generation groove 12 is not limited to being linear, but may be arc or spiral when viewed in the axial direction.

Further, the inner diameter end 12b of the dynamic pressure generation groove 12 functions as a pressure generating portion. The downstream side of the inner diameter end 12b in the relative rotation direction is referred to as a corner portion 12c. Specifically, the corner portion 12c is a portion where a side wall located on the downstream side in the relative rotation direction and extending radially inward from the outer diameter end of the dynamic pressure generation groove 12 and the inner diameter end 12b are connected at a substantially right angle.

The plurality of dynamic pressure generation grooves 12 have different radial dimensions from the outer diameter end 12a to the inner diameter end 12b. The plurality of dynamic pressure generation grooves 12 are arranged such that the corner portions 12c of the grooves 12 are arranged on an imaginary line L1 that extends in a sine wave shape in FIG. 3. In other words, a line connecting the corner portions 12c of the dynamic pressure generation grooves 12 defines the contour of a sine wave.

In detail, the imaginary line L1 extends in a sine wave shape repeating a peak M protruding into the inner space S1 and a valley V recessed into the outer space S2 with respect to the peak M, that is, protruding into the outer space S2. In this embodiment, the boundary between the peaks M and the valleys V is an imaginary line L2 that connects points of zero phase and zero amplitude, that is, an annular imaginary line L2 that crosses the apex of the peaks M in the radial direction and the radial center of the bottom of the valleys V in the radial direction and extends in the circumferential direction. Furthermore, the wave shape is not limited to the sine wave. In other words, the shapes of the peaks do not have to be substantially the same, and the same applies to the valleys.

One set of fluid recovery mechanisms 13 is formed in a region R1, which will be described later, between adjacent peaks M on the inner diameter side of the imaginary line L1.

More specifically, each fluid recovery mechanism 13 is formed at a position closer in the circumferential direction to the upstream peak M than to the downstream peak M of the rotating seal ring 20 in the rotation direction, and is disposed on the downstream side of the upstream peak M in the rotation direction of the rotating seal ring 20 and on the inner space S1 side. In other words, each fluid recovery mechanism 13 is disposed at a position overlapping with the adjacent peak M in the radial direction and the circumferential direction, that is, an overlapping position when viewed from the radial direction and the circumferential direction.

Further, at least a land 14a to be described later is disposed between each dynamic pressure generation groove 12 and each fluid recovery mechanism 13.

Further, at least a land 14b, which will be described later, is disposed between each fluid recovery mechanism 13 and an inner peripheral edge 11a of the sliding surface 11. That is, the fluid recovery mechanism 13 does not communicate with the inner space S1.

One set of fluid recovery mechanism 13 is composed of three inclined grooves 15 extending in the circumferential direction. The three inclined grooves 15 are arranged substantially parallel to each other at a predetermined interval. Further, the depth of the three inclined grooves 15 is substantially constant and is substantially the same as the depth of each dynamic pressure generation groove 12. Furthermore, the number of inclined grooves may be one or more, and may be changed as appropriate. Further, in the plurality of inclined grooves, at least one inclined groove may be non-parallel to the other inclined grooves, or all of the inclined grooves may be non-parallel to each other.

The inclined groove 15 extends linearly to be slightly inclined from the circumferential direction of the sliding surface 11. More specifically, the inclined groove extends from the leakage side to the sealed fluid side toward the downstream side in the relative rotation direction to be slightly inclined so that an upstream end 15a in the relative rotation direction of the rotating seal ring 20 is located on the inner space S1 side and a downstream end 15b is located on the outer space S2 side in relation to the circumferential direction of the sliding surface 11.

In this way, when the component extending in the circumferential direction is large and the component extending in the radial direction is small, in this embodiment, it is described that the circumferential component is larger than the radial component.

Furthermore, the inclined groove is preferably a groove in which the circumferential component is larger than the radial component. As long as this requirement is met, the shape is not limited to a straight line shape, but may be a curved shape, for example, an arc shape or a spiral shape when viewed in the axial direction, or may be a meandering shape, and the shape may be modified as appropriate.

Here, the imaginary regions R1 and R2 will be described. Referring to FIG. 3, the regions R1 and R2 are regions defined by imaginary lines L3 and L4. The imaginary line L3 has the same phase as the imaginary line L1 but has a different intercept. In other words, the imaginary line L3 is a sinusoidal line located radially inward of the imaginary line L1, and the imaginary line L4 is a line whose phase is slightly advanced from that of the imaginary line L3.

The region R1 is a region in which the imaginary line L3 is located on the imaginary line L1 side in relation to the imaginary line L4. The region R2 is a region in which the imaginary line L4 is located on the imaginary line L1 side in relation to the imaginary line L3.

Since the imaginary lines L1 and L3 are substantially parallel to each other, the radial dimension between the imaginary lines L1 and L3 is substantially constant in the circumferential direction. In this embodiment, the region between the imaginary lines L1 and L3 that extends sinusoidally and is continuous in an annular shape is defined as the land 14a. Furthermore, the radial dimensions of the lands 14a may be varied as appropriate, may vary circumferentially, or may be different at least in part.

Further, since the imaginary line L3 has substantially the same waveform as the imaginary line L4, a line connecting the apex on the inner diameter side of the imaginary line L3 and the apex on the inner diameter side of the imaginary line L4 forms an annular imaginary line L5. The radial dimension between the imaginary line L5 and the inner peripheral edge 11a is substantially constant in the circumferential direction. In this embodiment, the annular continuous region between the imaginary line L5 and the inner peripheral edge 11a is defined as a land 14b. Furthermore, the radial dimension of the land 14b may be changed as appropriate.

Further, the upstream end 15a of each inclined groove 15 is provided on the upstream side in the rotation direction of an imaginary line L6 that passes through the bottom of the valley V of the imaginary line L1 and extends in the radial direction. Further, the imaginary line L6 also passes through the apex of the imaginary line L3.

Next, the sealing between the outer space S2 and the inner space S1 by the stationary seal ring 10 and the rotating seal ring 20 will be described. First, when the rotating seal ring 20 is not rotating, the sliding surface 11 and the sliding surface 21 of the rotating seal ring 20 are in surface contact with each other. In particular, the annular land 14b prevents the fluid in the inner space S1 from flowing out between the sliding surfaces 11 and 21.

Next, when the rotating seal ring 20 is rotating, as illustrated by the thin solid arrows in FIG. 3, the sealed fluid F in each dynamic pressure generation groove 12 attempts to move in the rotation direction of the rotating seal ring 20 due to shear with the sliding surface 21. At that time, the sealed fluid F is guided along the dynamic pressure generation groove 12 to the corner portion 12c and flows out between the sliding surfaces 11 and 21, more specifically, between the land 14a and the sliding surface 21 from the corner portion 12c and the vicinity of the corner portion to generate a positive pressure.

The sealed fluid F having flowed out between the sliding surfaces 11 and 21 from the corner portion 12c and the vicinity of the corner portion moves on the land 14a in the rotation direction of the rotating seal ring 20 as illustrated by the thin dashed arrow in FIG. 3. In this way, the stationary seal ring 10 can retain the sealed fluid F for a long period of time in the lands 14a which overlap with the dynamic pressure generation grooves 12 in the radial and circumferential directions.

Further, when the rotating seal ring 20 rotates, as illustrated by the white arrow in FIG. 3, the sealed fluid F in the inclined groove 15 is moved in the rotation direction of the rotating seal ring 20 due to shear with the sliding surface 21, and is guided along the inclined groove 15 to flow out between the sliding surfaces 11 and 21 from the downstream end 15b and the vicinity of the downstream end.

As described above, the circumferential component of the inclined groove 15 is larger than the radial component. Therefore, although the pressure generated at the downstream end 15b of the inclined groove 15 and the vicinity of the downstream end is positive, the pressure is much smaller than the positive pressure generated at the corner portion 12c of the dynamic pressure generation groove 12 and the vicinity of the corner portion.

For this reason, the sealed fluid F having flowed out between the land 14a and the sliding surface 21 from the downstream end 15b of the inclined groove 15 and the vicinity of the downstream end is less likely to impede the movement of the sealed fluid F having flowed out between the land 14a and the sliding surface 21 from the dynamic pressure generation groove 12, and is moved in the rotation direction of the rotating seal ring 20 together with the sealed fluid F having flowed out between the land 14a and the sliding surface 21 from the dynamic pressure generation groove 12.

On the other hand, a relatively negative pressure is generated in the inclined groove 15. This negative pressure increases as it approaches the upstream end 15a. That is, the force sucking the sealed fluid F becomes stronger.

Therefore, each inclined groove 15 can easily introduce the sealed fluid F that flows out from the corner portion 12c and the vicinity of the corner portion in each dynamic pressure generation groove 12 located on the downstream side in the rotation direction from the apex of the peak M among the peaks M adjacent to the upstream side of the rotating seal ring 20 in the rotation direction in relation to the fluid recovery mechanism 13 and moves on the land 14a in the rotation direction of the rotating seal ring 20.

Further, the upstream end 15a of each inclined groove 15 is provided on the upstream side of the imaginary line L6 in the rotation direction. In other words, the upstream end 15a of each inclined groove 15 is disposed closer to the peak M adjacent to the upstream side of the rotating seal ring 20 in the rotation direction than the imaginary line L6. Accordingly, each inclined groove 15 can easily introduce the sealed fluid F thereinto.

Further, the inclined groove 15 is inclined so that the downstream end 15b is located on the outer diameter side in relation to the upstream end 15a. Therefore, the sealed fluid F flowing out between the sliding surfaces 11 and 21 from the downstream end 15b flows slightly toward the outer space S2.

As a result, the fluid recovery mechanism 13 can prevent the sealed fluid F from leaking into the inner space S1.

Further, the sealed fluid F having flowed out between the sliding surfaces 11 and 21 from the corner portion 12c of each dynamic pressure generation groove 12 located at the valley V and the vicinity of the corner portion moves in the substantially circumferential direction on the land 14a or the land on the more outer diameter side to be discharged to the outer space S2 or flows into the dynamic pressure generation groove 12 located on the downstream side of the rotating seal ring 20 in the rotation direction to flow out between the sliding surfaces 11 and 21 from the corner portion 12c.

The same applies to the sealed fluid F having flowed out from the corner portion 12c of each dynamic pressure generation groove 12 located on the upstream side in the rotation direction and the vicinity of the corner portion from the apex of the peak M among the peaks M adjacent to the downstream side of the rotating seal ring 20 in the rotation direction in relation to the fluid recovery mechanism 13.

As described above, the stationary seal ring 10 of this embodiment can retain the sealed fluid F, having a relatively high dynamic pressure and having flowed out between the sliding surface 21 and the land 14a located on the downstream side of the rotating seal ring 20 in the rotation direction from the dynamic pressure generation groove 12 located at the peak M, between the sliding surfaces 11 and 21 for a long period of time.

Further, since the stationary seal ring 10 is less influenced by the pressure generated by the fluid recovery mechanism 13 and the dynamic pressure generation groove 12 effectively generates a dynamic pressure, it is easy to maintain floating balance.

As a result, the stationary seal ring 10 can improve lubrication while preventing leakage.

Further, each inclined groove 15 does not communicate with the inner space S1. Accordingly, each inclined groove 15 prevents the fluid on the inner space S1 side from being introduced between the sliding surfaces 11 and 21. For this reason, the stationary seal ring 10 can prevent the influence due to the fluid on the inner space S1 side.

Further, since the stationary seal ring 10 introduces the fluid on the inner space S1 side between the sliding surfaces 11 and 21 through each inclined groove 15, the dynamic pressure generation groove 12 can more effectively generate a dynamic pressure without generating a large pressure.

Further, the stationary seal ring 10 can guide the sealed fluid F having flowed out from the dynamic pressure generation groove 12 in the circumferential direction by the fluid recovery mechanism 13 and secure the sealed fluid between the sliding surfaces 11 and 21.

Further, the stationary seal ring 10 can more effectively generate a dynamic pressure by the dynamic pressure generation groove 12 without generating a large pressure by the fluid recovery mechanism 13.

Further, the fluid recovery mechanism 13 is disposed between the adjacent peaks M. Accordingly, it is possible to shorten the radial dimension from the apex of the peak M to the inner space S1. Therefore, the stationary seal ring 10 can reduce pressure distribution over a wide radial region while preventing leakage.

Further, the fluid recovery mechanism 13 is disposed at a radial position overlapping with the peak M located on the upstream side of the adjacent rotating seal ring 20 in the rotation direction. Therefore, the stationary seal ring 10 can secure the land 14a necessary for retaining the sealed fluid F for a long period of time.

The fluid recovery mechanism 13 is disposed at a circumferential position overlapping with the peak M located on the upstream side of the adjacent rotating seal ring 20 in the rotation direction. Therefore, the stationary seal ring 10 can secure the land 14a necessary for retaining the sealed fluid F for a long period of time.

Further, the region R2 not provided with the fluid recovery groove and the region between the imaginary line L3 and the imaginary line L4 are part of the land 14. Therefore, the stationary seal ring 10 is designed to easily retain the sealed fluid F for a longer period of time. Further, when the rotating seal ring 20 is not rotating, the sealing performance is improved.

Further, since a set of fluid recovery mechanisms 13 includes the plurality of inclined grooves 15, it is possible to stabilize the flow of the sealed fluid F when guiding the sealed fluid F.

Furthermore, in this embodiment, although it has been described that the imaginary line L1 and the imaginary line L3 have substantially the same shape, the present invention is not limited thereto, and they may not have substantially the same shape. On the other hand, it is preferable that the apex of each peak or valley on the imaginary line L1 and the apex of each peak or valley on the imaginary line L3 are located on the same radial direction.

Further, in this embodiment, although it has been described that the imaginary line L3 and the imaginary line L4 have substantially the same shape, the present invention is not limited thereto, and they may have different shapes. On the other hand, the circumferential dimension, that is, the period of the adjacent peak and valley in the imaginary line L3 and the circumferential dimension, that is, the period of the adjacent peak and valley in the imaginary line L4 are preferably that they have the same period in which the circumferential positions are different or one period has a proportional relationship with the other period.

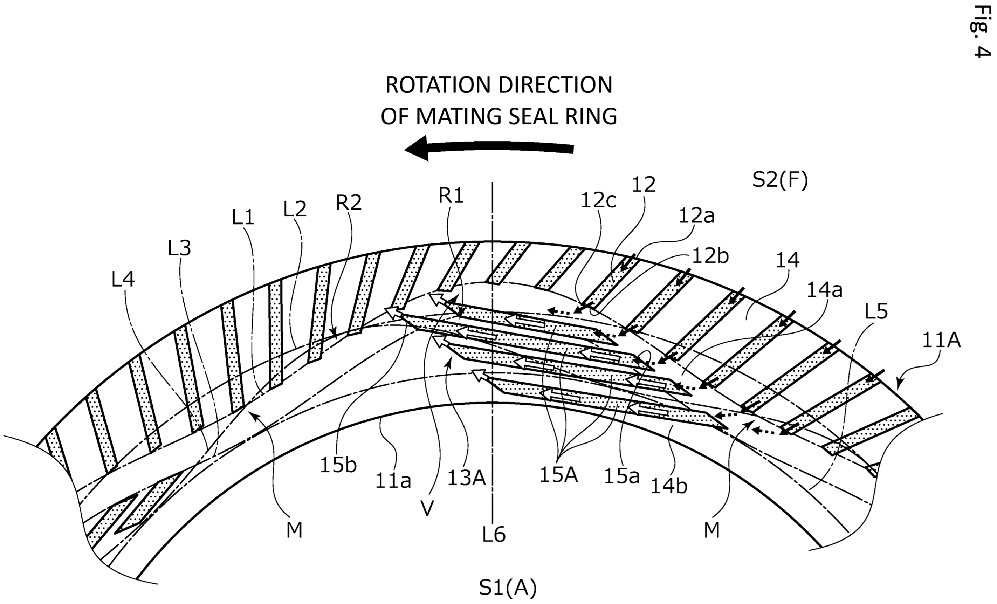

Further, in this embodiment, although it has been described that the fluid recovery groove is not provided in a region other than the region R1, the present invention is not limited thereto, and the fluid recovery groove may be provided in a region other than the region R1 as in a sliding surface 11A illustrated in FIG. 4 illustrating a modified example.

In addition, it is preferable that the upstream end 15a of each inclined groove 15A in one set of fluid recovery mechanisms 13A is provided on the upstream side of the imaginary line L6 in the rotation direction. With such a configuration, the sealed fluid F having flowed out from the peak M adjacent to the upstream side of the rotating seal ring 20 in the rotation direction in relation to the fluid recovery mechanism 13 can be easily introduced into the inclined groove 15A.

### {Second embodiment}

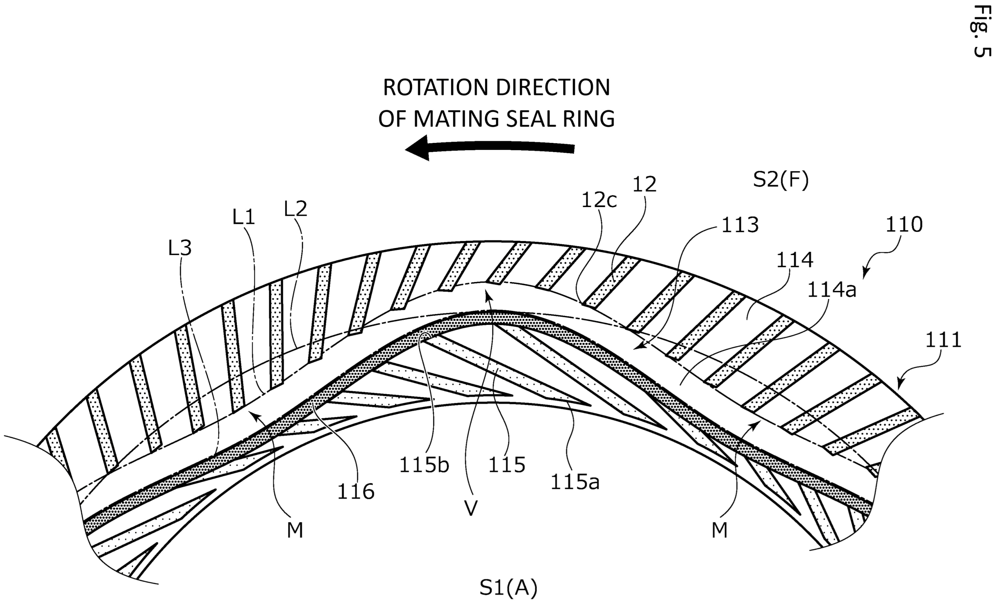

Next, sliding components according to a second embodiment of the present invention will be described with reference to FIG. 5. Furthermore, the description of the configurations which are the same as and overlap with those of the first embodiment will be omitted.

A sliding surface 111 of a stationary seal ring 110 of the second embodiment is provided with the plurality of dynamic pressure generation grooves 12 and one fluid recovery mechanism 113.

The fluid recovery mechanism 113 includes an inclined groove 115 and an annular groove 116.

The inclined groove 115 has a circumferential component larger than a radial component. Further, a downstream end 115b of the inclined groove 115 communicates with the annular groove 116.

The annular groove 116 is a sinusoidal annular groove that is disposed radially inward from the imaginary line L3 and extends along the imaginary line L3. The annular groove 116 is formed to be deeper than the dynamic pressure generation groove 12 or the inclined groove 115. Preferably, the annular groove 116 has a depth ten times or more that of the dynamic pressure generation groove 12 and the inclined groove 115.

Accordingly, the fluid recovery mechanism 113 of this embodiment can store the sealed fluid F having flowed out between the sliding surfaces 111 and 21 by the annular groove 116. Therefore, the sealed fluid F having flowed out between the sliding surfaces 111 and 21 from each dynamic pressure generation groove 12 can be restricted from moving toward the inner space S1.

Further, the sealed fluid F in the inclined groove 115 is guided toward the downstream end 115b along the inclined groove 115 with the rotation of the rotating seal ring 20 to be introduced into the annular groove 116 from the downstream end 115b. Accordingly, the annular groove 116 can also store the sealed fluid F having moved toward the inner space S1 from the annular groove 116 by crossing the annular groove 116.

Further, since the annular groove 116 is sufficiently deep, almost no positive pressure is generated even when the sealed fluid F flows out between the sliding surfaces 111 and 21 from the annular groove 116 with the rotation of the rotating seal ring 20.

Accordingly, the sealed fluid F having flowed out between a land 114a and the sliding surface 21 from the dynamic pressure generation groove 12 and having a relatively high dynamic pressure can be retained between the sliding surfaces 111 and 21 for a long period of time. Therefore, the stationary seal ring 110 can improve lubrication while restricting leakage.

Further, since the annular groove 116 has a shape similar to and substantially parallel to the imaginary line L1, it is possible to efficiently recover the sealed fluid F having flowed out from the corner portion 12c of each dynamic pressure generation groove 12 located on the downstream side of the rotating seal ring 20 in the rotation direction from the apex of the peak M and the vicinity of the corner portion and moved on the land 114a in the rotation direction of the rotating seal ring 20.

### {Third embodiment}

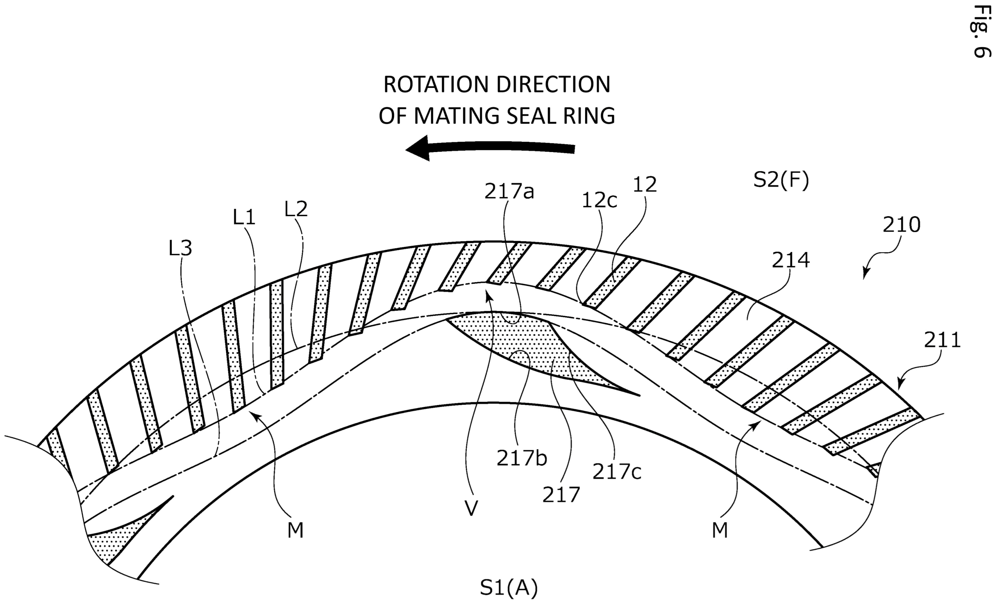

Next, sliding components according to a third embodiment of the present invention will be described with reference to FIG. 6. Furthermore, the description of the configurations which are the same as and overlap with those of the first embodiment will be omitted.

A sliding surface 211 of a stationary seal ring 210 of the third embodiment is provided with the plurality of dynamic pressure generation grooves 12 and a plurality of fluid recovery grooves 217.

The fluid recovery groove 217 is formed between the adjacent peaks M and is a dimple defined by wall surfaces 217a, 217b, and 217c and a bottom surface. In this way, in the present invention, the dimples are regarded as a form of groove. Furthermore, the depth of the fluid recovery groove 217 is substantially constant and is substantially the same as the depth of each of the dynamic pressure generation grooves 12.

The wall surface 217a extends along the imaginary line L3 and is connected to the wall surfaces 217b and 217c. Furthermore, the wall surface 217a may be linear or serpentine as long as the wall surface is connected to the wall surfaces 217b and 217c, and the shape of the wall surface may be changed as appropriate.

The wall surface 217b extends from the upstream side to the downstream side in the rotation direction of the rotating seal ring 20 in a clothoid curve inclined radially outward.

The wall surface 217c extends from the upstream side to the downstream side in the rotation direction of the rotating seal ring 20 in a clothoid curve inclined radially outward.

Accordingly, the fluid recovery groove 217 of this embodiment can smoothly guide the sealed fluid F flowing into the inside thereof into the intersection of the wall surfaces 217a and 217b.

Further, the region of a land 214 necessary for retaining the sealed fluid F for a long period of time can be secured in a circumferential overlapping region between the fluid recovery groove 217 and each dynamic pressure generation groove 12 on the upstream side of the rotating seal ring 20 in the rotation direction from the apex of the peak M.

Further, the region of the land 214 necessary for retaining the sealed fluid F for a long period of time can be secured in a circumferential overlapping region between the fluid recovery groove 217 and each dynamic pressure generation groove 12 on the downstream side of the rotating seal ring 20 in the rotation direction from the apex of the peak M.

Furthermore, in this embodiment, although it has been described that the fluid recovery groove is not provided in a circumferential overlapping region between the fluid recovery groove 217 and each dynamic pressure generation groove 12 on the upstream side of the rotating seal ring 20 in the rotation direction from the apex of the peak M, the present invention is not limited thereto, and the fluid recovery groove may be provided. The same applies to the region between the imaginary line L3 and the wall surface 217c of the fluid recovery groove 217.

### {Fourth embodiment}

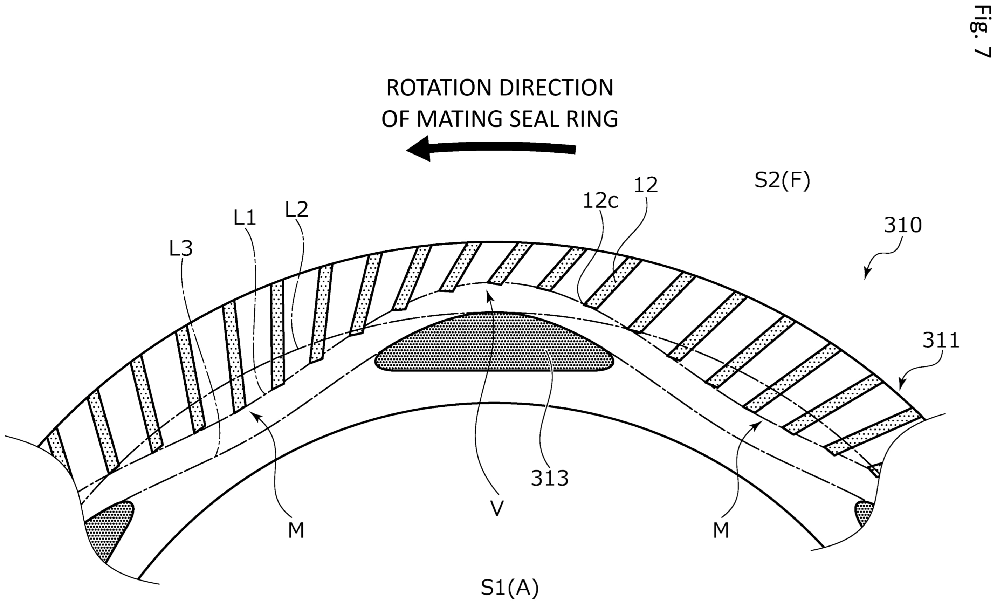

Next, sliding components according to a fourth embodiment of the present invention will be described with reference to FIG. 7. Furthermore, the description of the configurations which are the same as and overlap with those of the first embodiment will be omitted.

A sliding surface 311 of a stationary seal ring 310 of the fourth embodiment is provided with the plurality of dynamic pressure generation grooves 12 and a plurality of fluid recovery grooves 313.

The fluid recovery groove 313 is a triangular dimple with rounded corners having a wall surface extending along the imaginary line L3. Further, the depth of the fluid recovery groove 313 is substantially constant and is 10 times or more the depth of the dynamic pressure generation groove 12.

Accordingly, the fluid recovery groove 313 can store the sealed fluid F having flows out between the sliding surfaces 311 and 21 from the corner portion 12c of each dynamic pressure generation groove 12 and the vicinity of the corner portion.

Furthermore, the depth of the fluid recovery groove may be changed as appropriate as long as the fluid recovery groove can store the sealed fluid F. Furthermore, the depth of the fluid recovery groove may be non-uniform.

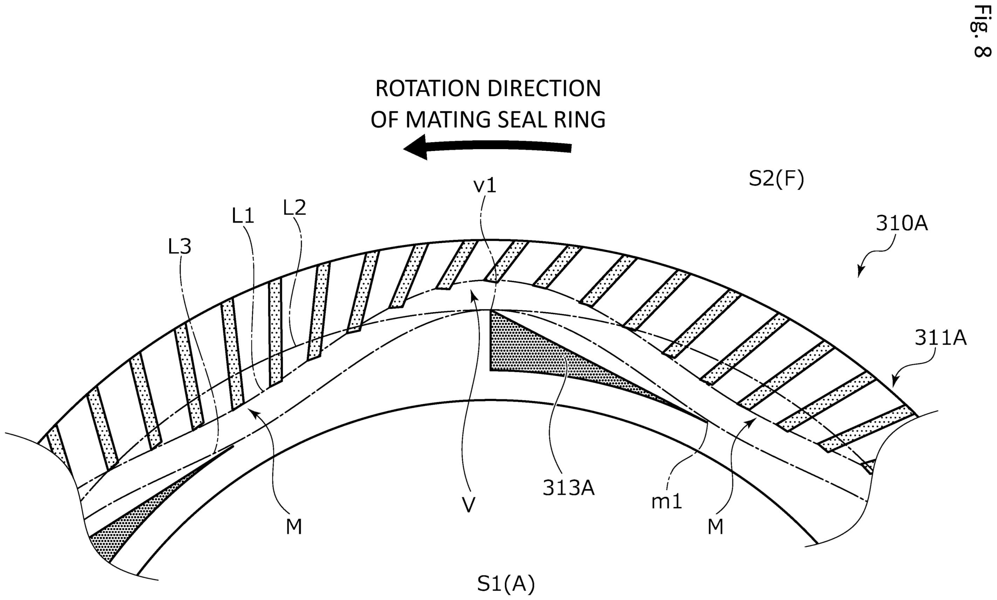

Further, if the sealed fluid F can be stored, as in a fluid recovery groove 313A of a stationary seal ring 310A illustrated in FIG. 8 illustrating a modified example, the fluid recovery groove may be formed in a right-angled triangle shape to be disposed from the imaginary line L3 toward the inner space S1 side and from the apex of the peak M toward the downstream side of the rotating seal ring 20 in the rotation direction.

More specifically, the fluid recovery groove 313A is formed in a substantially right-angled triangular shape having a hypotenuse connecting an apex m1 of the peak on the imaginary line L3 and a bottom point v1 of the valley on the imaginary line L3. Furthermore, the peaks of the imaginary line L3 are portions that overlap with the peaks M of the imaginary line L1 in the radial direction, and the valleys of the imaginary line L3 are portions that overlap with the valleys V of the imaginary line L1 in the radial direction.

With such a configuration, it is possible to store the sealed fluid F having flowed out between the sliding surfaces 311A and 21 from each dynamic pressure generation groove 12 on the downstream side of the rotating seal ring 20 in the rotation direction from the apex of the peak M.

Further, a land region necessary for retaining the sealed fluid F for a long period of time can be secured in a circumferential overlapping region between the fluid recovery groove 313A and each dynamic pressure generation groove 12 on the upstream side of the rotating seal ring 20 in the rotation direction from the apex of the peak M.

### {Fifth embodiment}

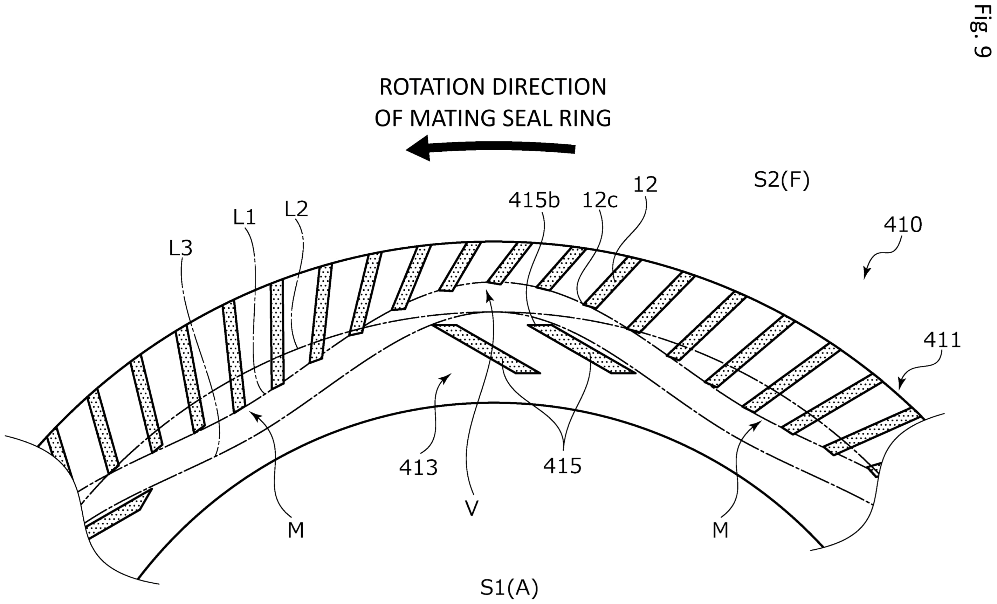

Next, sliding components according to a fifth embodiment of the present invention will be described with reference to FIG. 9. Furthermore, the description of the configurations which are the same as and overlap with those of the first embodiment will be omitted.

A sliding surface 411 of a stationary seal ring 410 of the fifth embodiment is provided with the plurality of dynamic pressure generation grooves 12 and a plurality of fluid recovery mechanisms 413.

The fluid recovery mechanism 413 includes two inclined grooves 415 arranged on the inner space S1 side in relation to the imaginary line L3 and between the adjacent peaks M.

The inclined groove 415 has a circumferential component that is larger than the radial component.

Accordingly, the sealed fluid F having flowed out between the sliding surfaces 411 and 21 from each dynamic pressure generation groove 12 on the downstream side of the rotating seal ring 20 in the rotation direction from the apex of the peak M can be guided along the inclined groove 415 to the downstream end 415b, thereby preventing the leakage into the inner space S1.

Further, a land region necessary for retaining the sealed fluid F for a long period of time can be secured in a circumferential overlapping region between the fluid recovery mechanism 413 and each dynamic pressure generation groove 12 on the upstream side of the rotating seal ring 20 in the rotation direction from the apex of the peak M.

Furthermore, in this embodiment, although it has been described that the fluid recovery groove is not provided in the circumferential overlapping region between the fluid recovery mechanism 413 and each dynamic pressure generation groove 12 on the upstream side of the rotating seal ring 20 in the rotation direction from the apex of the peak M, the present invention is not limited thereto, and the fluid recovery groove may be provided.

### {Sixth embodiment}

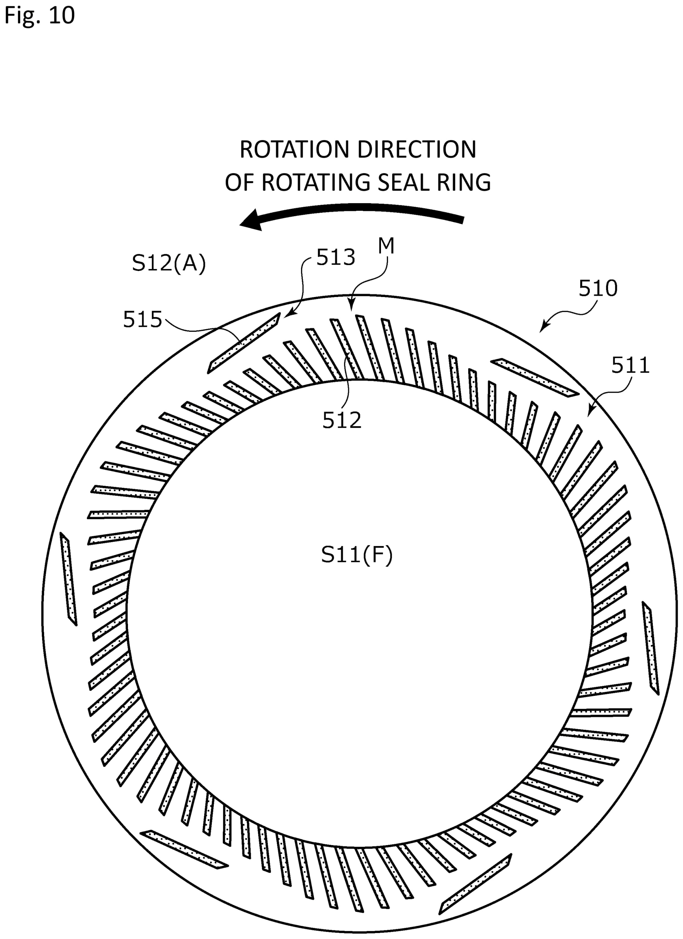

Next, sliding components according to a sixth embodiment of the present invention will be described with reference to FIG. 10. Furthermore, the description of the configurations which are the same as and overlap with those of the first embodiment will be omitted.

A mechanical seal to which a stationary seal ring 510 of the sixth embodiment is applied is of an outside type which seals the sealed fluid F present on an inner space S11 side of the sliding surfaces 511 and 21 and in which an outer space S12 communicates with the atmosphere A.

The sliding surface 511 is provided with a plurality of dynamic pressure generation grooves 512 and a plurality of fluid recovery mechanisms 513.

The dynamic pressure generation groove 512 has a shape obtained by substantially inverting the dynamic pressure generation groove 12 of the first embodiment in the radial direction.

The fluid recovery mechanism 513 includes one inclined groove 515. The inclined groove 515 has a shape obtained by substantially inverting the inclined groove 15 of the first embodiment in the radial direction.

Accordingly, the sealed fluid F having flowed out between the sliding surfaces 511 and 21 from each dynamic pressure generation groove 512 on the downstream side of the rotating seal ring 20 in the rotation direction from the apex of the peak M can be guided along the inclined groove 515 to the inner space S11, thereby preventing the leakage into the outer space S12.

In this way, the sliding component of the present invention may be applied to an environment in which the sealed fluid space is on the outer diameter side of the sliding surface, and the leakage side space is on the inner diameter side of the sliding surface.

Although the embodiments of the present invention have been described above with reference to the drawings, the specific configuration is not limited to these embodiments, and the present invention also includes modifications and additions that do not deviate from the scope of the present invention.

For example, in the first to sixth embodiments, although it has been described that the mechanical seal is an example of the sliding component, the present invention is not limited thereto, and the sliding component may be a sliding bearing or other sliding component other than the mechanical seal.

Further, in the first to sixth embodiments, although it has been described that the sealed fluid is a high-pressure liquid, the present invention is not limited thereto, and the sealed fluid may be a gas or a low-pressure liquid, or may be a mist mixture of liquid and gas.

Further, in the first to sixth embodiments, although it has been described that the leakage space side fluid is atmosphere as a low-pressure gas, the present invention is not limited thereto, and the leakage space side fluid may be liquid or high-pressure gas, or may be a mist mixture of liquid and gas.

Further, in the first to sixth embodiments, although it has been described that the sealed fluid space side is the high pressure side and the leakage space side is the low pressure side, the sealed fluid space side may be the low pressure side, the leakage space side may be the high pressure side, and the sealed fluid space side and the leakage space side may have substantially the same pressure.

Further, in the first to sixth embodiments, although an example has been described in which the dynamic pressure generation groove and the fluid recovery groove are provided in the stationary seal ring, the dynamic pressure generation groove and the fluid recovery groove may be provided in the rotating seal ring.

### {REFERENCE SIGNS LIST}

10 Stationary seal ring (sliding component)
11, 11A Sliding surface
12 Dynamic pressure generation groove
13, 13A Fluid recovery mechanism
15, 15A Inclined groove (fluid recovery groove)
20 Rotating seal ring (sliding component)
21 Sliding surface
110, 210, 310, 310A, 410, 510 Stationary seal ring
111, 211, 311, 311A, 411, 511 Sliding surface
113, 413, 513 Fluid recovery mechanism
115, 415, 515 Inclined groove (fluid recovery groove)
116 Annular groove
217, 313, 313A Fluid recovery groove
512 Dynamic pressure generation groove
A Atmosphere (leakage space side fluid)
F Sealed fluid
M Peak
S1, S11 Inner space
S2, S12 Outer space
V Valley

## Claims

1. Sliding components in which a pair of sliding surfaces rotate relative to each other to partition a sealed fluid space and a leakage space,
wherein at least one of the sliding surfaces is provided with a plurality of dynamic pressure generation grooves with different radial lengths,
wherein the plurality of dynamic pressure generation grooves are arranged such that a contour of a tip on the leakage space side draws peaks each of which protruded toward a leakage space side and valleys each of which is recessed toward a sealed fluid space side and the peaks and valleys are alternately arranged in a circumferential direction, and
wherein the one of the sliding surfaces is further provided with at least one fluid recovery groove which is located on a downstream side of the peak in a relative rotation direction and on the leakage space side.

2. The sliding components according to claim 1,
wherein the fluid recovery groove does not communicate with the leakage space.

3. The sliding components according to claim 1,
wherein a plurality of the fluid recovery grooves are formed and extend in a circumferential direction.

4. The sliding components according to any one of claims 1 to 3,
wherein the fluid recovery groove is disposed between adjacent two of the peaks.

5. The sliding components according to claim 4,
wherein the fluid recovery groove is disposed at a radial position overlapping with at least the peak.
